# EUROPEAN PATENT APPLICATION

(11) **EP 1 150 205 A1**
(43) Date of publication of application: **31.10.2001**
(21) Application number: 00201534.5
(22) Date of filing: 28.04.2000
(51) Int. Cl.: G06F 9/44

(54) **A computerised tool for converting information related to the hardware/software configuration of a distributed control system**

(71) Applicant: ABB Research Ltd., 8050 Zürich (CH)
(72) Inventor: Fay, Alexander, 69221 Dossenheim (DE); Kirmair, Stefan, 69120 Heidelberg (DE); Merker, Stephan, 68723 Schwetzingen (DE); Villa, Valerio, 22020 Gironico, (Co) (IT)
(74) Representative: Giavarini, Francesco

(57) **Abstract**

The present invention relates to a computerised tool for converting first information, having a first format for describing the hardware/software configuration of a first distributed control system, into second information having a second format for describing the hardware/software configuration of a second distributed control system.

## Description

The present invention relates to a computerised tool for converting information related to the hardware/software (HW/SW) configuration of a distributed control system (DCS).

More particularly the present invention relates to a computerised tool for converting first information having a certain format, which is related to a first DCS HW/SW configuration, into second information having another format, which is related to a second DCS HW/SW configuration.

Distributed control systems are largely used in the state of the art with the purpose of controlling industrial processes. Particularly, distributed control systems have been conceived with the purpose of coping with the intrinsic distributed nature of said industrial processes, through a physical distribution of control units, which can communicate and exchange data/information.

A DCS can process the data/information acquired from the process and can determined the physical behaviour of the process by means of controllers, which can interface to the process and can ensure the satisfaction of predefined requirements.

Any DCS is typically described by information (data, parameters, programs and the like) regarding its particular HW/SW configuration. This information typically comprises:
- information regarding the number, the type and the configuration of the controllers included in the DCS; and/or
- information regarding the number, the type and the configuration of the input/output (I/O) boards connected to the controllers; and/or
- information regarding the number, the type and the configuration of the devices, which are used for establishing a communication between the controllers; and/or
- information regarding the number, the type and the configuration of the devices, which are used for supervising the controllers; and/or
- information regarding the behaviour of the controllers: this information generally comprises the programs that are run by the DCS controllers and other requirements concerning, for example, the timing of these programs and the like; and/or
- information tags, which are useful for identifying the various elements of a DCS.

As mentioned above, the information for describing a DCS HW/SW configuration is characterised by a proper format, which is provided with a predefined syntax and a predefined semantics. The term "syntax" and the term "semantics" respectively mean a set of codification rules and a set of functional relationships and rules, characterising an information format.

As technology proceeds, a DCS might become obsolete or, more generally, it might arise the need of controlling a certain industrial process with a different DCS, provided with more powerful hardware and software means.

In this case, it is necessary to make provision for stopping the process operation, installing and configuring the new DCS.

In order to minimise the DCS upgrade costs the information related to the HW/SW configuration of the old DCS is generally reused. This fact implies to reuse technical solutions that have already been tested during the years and that, therefore, ensure a high level of reliability of the control of the process.

Obviously, these technical solutions could certainly be improved but, at this point, the effort for upgrading the old DCS is certainly reduced if compared with the effort that would be needed for generating "ex novo" the information regarding the HW/SW configuration of the new DCS.

Unfortunately, even if the process behaviour remains the same, due to the fact that the DCS is physically changed, there is a little chance of reusing the information related to the HW/SW configuration of the old DCS, as it is.

The incompatibility between the new and the old DCS HW/SW configuration forces the engineers to reprocess the information regarding the old DCS HW/SW configuration, so as to reconfigure the new DCS.

In practice, the information regarding the old HW/SW configuration is converted into information, which is useful for describing the HW/SW configuration of the new DCS.

A traditional approach for performing this information conversion is to use mapping tables, which allow establishing logic links between the elements of the old DCS and the elements of the new DCS. In practice, these mapping tables represent a guide, which allows creating the elements of the new DCS configuration, basing on the elements of the old DCS configuration.

This traditional approach suffers from several drawbacks.

In fact, the conversion of the information is generally realised in a manual fashion. Although the use of the mentioned mapping tables certainly represents a relief in the conversion process, the common practice has shown that the requested manual work implies significant negative consequences in terms of consistency and completeness of the information conversion.

Moreover, the activity of manually and repetitively interacting with said mapping tables might be a tremendous source of trivial mistakes which, in most cases, can be checked with great difficulty.

This fact can have negative consequences when the DCS is installed and commissioned.

The probability of making trivial mistakes is further increased by the fact that the amount of information to translate might be, in many cases, very huge. In fact, it should be considered that a DCS system of normal size generally comprises several controllers, thousands of signals to exchange and thousands of function blocks.

Therefore, a big amount of time is needed for performing the information conversion: this fact impacts negatively the costs for upgrading the DCS system.

In order to try to solve these drawbacks, some conversion methods of the state of the art make use of computerised tools.

These computerised tools generally aim at speeding up the conversion operation by means of the automatic conversion of the information regarding the input/output configuration of single elements of the old DCS. Very often, said computerised tools have been conceived with the purpose of converting the software programs that are run by single elements of the old DCS (for example controllers).

In practice, such computerised tools can be considered as partially embedding the mapping tables that are used, as mentioned above, in the more traditional approaches.

An example of these computerised tools is reported in the US patent N° 5,512,469. In this patent, it is proposed a method, which, by means of a computerised support, performs the conversion of the information related to the hardware configuration and the control program of a programmable logic controller (PLC). Said information is converted into the information related to the hardware configuration and the control program of a second PLC.

Although these computerised tools certainly relieve engineers from part of the conversion work amount, it is not possible to consider them as a satisfactory solution for the technical problems above described.

In fact, a DCS is characterised by a large amount of hidden logical links between the elements of its own HW/SW configuration. These links can pertain to very different aspects of the DCS and are essential for ensuring a good operation of the DCS.

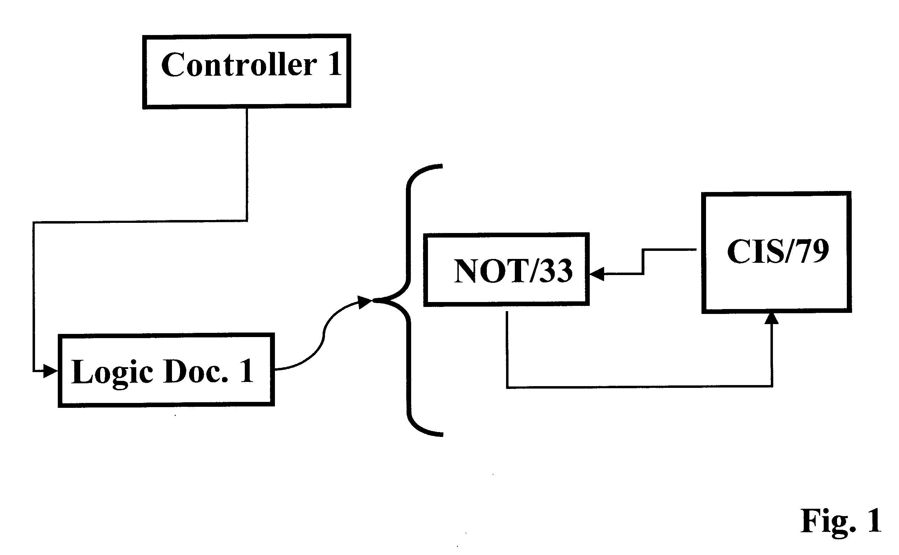

In order to understand better this concept, reference should be made to figure 1, where a piece of information, representing a small portion of the HW/SW configuration of a DCS of the state of the art, is illustrated.

In figure 1, it is represented a controller, which comprises the functional logic blocks named as CIS/79 and NOT/33. As it appears from figure 1, visible communication links between said two blocks exist. But, the presence of the functional block CIS/79 implies the existence of an I/O board having some analog/digital inputs/outputs.

Although these links are not visible in the piece of information represented in figure 1, they are implicitly present and they are equally important for ensuring the correct functionality of the controller. It appears evident that the task of maintaining the consistency of said hidden links is critical during the conversion process.

Unfortunately, the use of the computerised tools of the state of the art can hardly accomplish this task, due to their capabilities that are generally intrinsically restricted to particular elements the DCS HW/SW configuration.

For example, referring again to the US patent N° 5,512,469, the computerised tool, which embeds the described method, can hardly avoid the loss of logical hidden links different elements of the DCS (e.g. between different PLCs or between the PLC and other different controllers). In fact, said computerised tool is focused on the conversion of the information related to a specific element of the DCS.

Neither, this problem can be solved simply using a large computerised architecture, which simply performs a juxtaposition of different computerised tools relying on different DCS elements, because the nature and the presence of said links strictly depend on the characteristics of the DCS which is necessary to upgrade.

Therefore, even though the mentioned computerised tools of the state of the art represent a useful improvement of the more traditional practice, a cumbersome amount of manual work is nevertheless needed. This means that the mentioned drawbacks are still relevant and basically unsolved.

Furthermore, an other important drawback derives from the fact that the approach of the known conversion methods, which make use of computerised tools, is generally of the "monolithic" kind.

In fact, the known computerised tools generally simply perform the conversion of some pieces of input information into some other pieces of output information, without establishing a satisfactory level of interactivity between the user and the information flow, during the information conversion process.

In this manner, it is difficult for the user to optimise the information contents, during the conversion process. Generally, this operation, which is critical for ensuring optimal performances for the new DCS, is therefore performed after the conversion process.

Consequently, installation and commissioning costs of the new DCS are increased.

The main aim of the present invention is to provide a computerised tool which allows performing the conversion of the information related to a DCS HW/SW configuration, reducing to a negligible level the drawbacks that have been described above.

Within this scope, another object of the present invention is to provide a computerised tool, which allows performing the conversion of the information related to a DCS HW/SW configuration in a consistent and complete manner, minimising the need of manual rework.

Another object of the present invention is to provide a computerised tool, which allows performing the conversion of the information related to a DCS HW/SW configuration without missing the logical hidden connections linking different elements of the DCS HW/SW configuration.

Another object of the present invention is to provide a computerised tool, which allows performing the conversion of the information related to a DCS HW/SW configuration, maintaining, at the same time, the possibility of supervising the conversion process and of interacting with it, if necessary.

Another object of the present invention is to provide a computerised tool, which can be easily used for performing the conversion of the information related to the HW/SW configuration of different DCS systems, independently of their particular structure and configuration.

Not the least object of the present invention is to provide a computerised tool, which is of relatively easy realisation and which allows achieving a significant reduction of the DCS upgrading time and costs.

Thus, the present invention provides a computerised tool for converting first information having a first format, comprising a first syntax and a first semantics for describing the hardware/software configuration of a first distributed control system. The computerised tool, according to the present invention, converts said first information is into second information having a second format comprising a second syntax and a second semantics for describing the hardware/software configuration of a second distributed control system.

The computerised tool according to the present invention is characterised in that it comprises:
- a first computerised module for:
   - acquiring said first information from the user;
   - converting said first information into third information having a third format comprising a third syntax and a third semantics for describing the hardware/software configuration of a virtual distributed control system, said virtual distributed control system having hardware/software configuration independent of the hardware/software configuration of said first and second distributed control systems; and
   - a second computerised module for:
      - acquiring said third information;
      - converting said third information into said second information;
      - making said second information available to the user.

The computerised tool according to the present invention allows achieving the intended aims.

The computerised tool, according to present invention, performs an indirect conversion of the information related to the hardware/software (HW/SW) configuration of the old DCS.

Thanks to said first computerised module, the information related to the HW/SW configuration of the old DCS, is converted into information having a "neutral" format, which depends only on the internal representation used by the computerised tool itself.

From said neutral format, the information is subsequently converted into information having a format which depends on the new DCS configuration.

All the elements of the old DCS configuration are, in practice, represented, during the conversion process, in a "neutral" format, which is characterised by a proper syntax and semantics which is suitable for the computerised tool internal processes.

It should be noticed that also the visible and hidden links among the DCS elements can be considered "per se" as DCS elements and can be represented in said "neutral" format. So, they can be converted and handled, minimising the possibilities of missing them during the conversion process.

In this manner, the conversion process pertains to the information related to the old DCS configuration, taken as a whole.

Therefore, the need for human intervention is effectively minimised. In fact, the user's manual work is, at this point, restricted to the activity of interacting with the computerised tool for supervising its operation and for optimising and improving the content of the information which is converted.

For a better understanding of the present invention, reference may be made to the detailed description reported hereinafter, taken in conjunction with the accompanying drawings in which:
figure 1 represents a portion of HW/SW configuration of a known DCS;
figure 2 represents the internal structure of the computerised tool according to the present invention;
figure 3 represents a first detail related to the internal structure of the computerised tool according to the present invention;

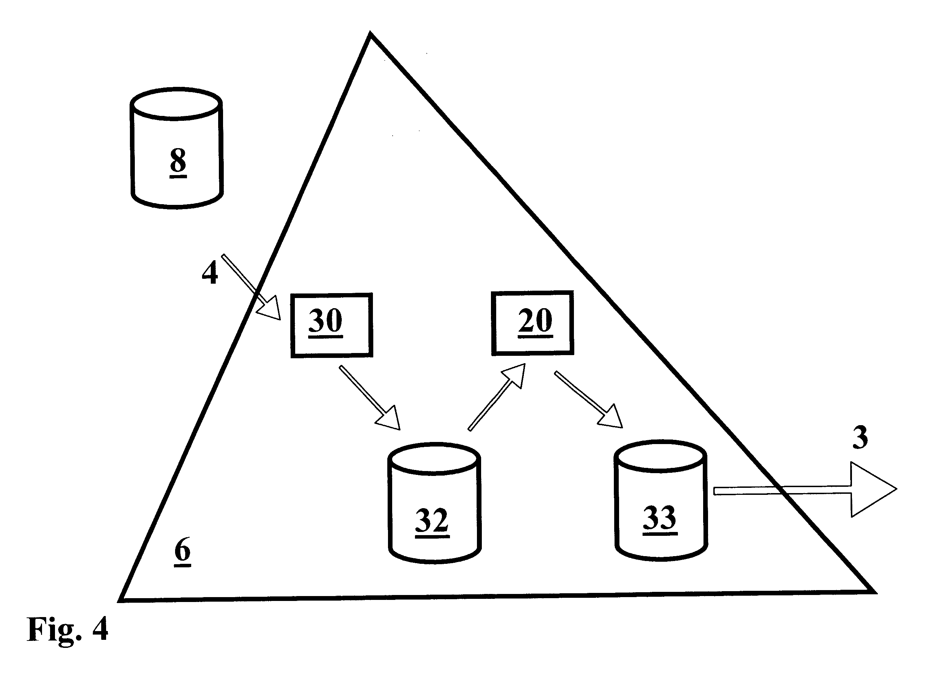

figure 4 represents a second detail related to the internal structure of the computerised tool according to the present invention.

Referring to figure 1, the computerised tool according to the present invention (reference 1) performs the conversion of first information (see arrow 2), having a first format related to the HW/SW configuration of a first distributed control system (not shown). The information 2 is converted into second information (see arrow 3) having a second format, which is related to the HW/SW configuration of a second distributed control system (not shown).

The information 2 has a first format provided with a first syntax and a first semantics for describing the hardware/software configuration of a first distributed control system. Accordingly, the information 3 has a second format provided with a second syntax and a second semantics for describing the hardware/software configuration of a second distributed control system

The computerised tool 1 comprises a first computerised module 5, which acquires the information 2 from the user, and executes the conversion of the information 2 into information 4, which has a third format substantially independent from said first and second distributed control systems.

In fact, the information 4 has a third format provided with a third syntax and a third semantics for describing the hardware/software configuration of a virtual distributed control system. Said virtual distributed control system has a hardware/software configuration independent of the hardware/software configuration of said first and second distributed control systems;

The computerised tool 1 also comprises a second computerised tool 6, which acquires the information 4, executes the conversion of the information 4 into the information 3 and makes available the information 3 to the user.

The computerised tool 1, according to the present invention, can comprise a third computerised module 7 for managing (arrows 100 and 101) the operation of the computerised modules 5 and 6. In particular, the computerised module 7 can comprise first storage means 8 for storing the information 4. The storage means 8 can be represented advantageously by a database or other suitable means for memorising information.

In order to manage, in a proper manner, the operation of the computerised modules 5 and 6, the computerised module 7 comprises preferably managing computerised means 9. Said computerised means 9 advantageously aim at performing a supervision of the operation of modules 5 and 6 and at optimising and/or restructuring the information, which is preferably stored in the storage means 8.

The operation of the computerised means 9 can be performed automatically or, preferably, a suitable level of interaction (see arrow 11) with the user can be provided.

For this aim, the computerised 9 can comprise a computerised user interface 10 for providing the user with diagnostic information 12 (for example logging graphs) related to the operation status of the computerised modules 5 and 6. Further, the user interface 10 is advantageously designed to allow the user to provide additional information 13 to the computerised means 9 for restructuring and/or optimising the information 4.

As it has been mentioned above, the information 4 is characterised by a third format, which is independent from both said first and second distributed control systems. In this "neutral" format, all the aspects that are relevant for the DCS HW/SW configuration can be split and kept separated.

For example, the number and the type of the DCS controllers can be represented with all the information on the input/output (I/O) hardware of the controllers, while the programs run by the controllers can be explicitly linked to tasks that define their time requirements. In this manner, the HW/SW configuration of the DCS is described by a format, which combines non-overlapping aspects in an orthogonal manner.

All the logical connections, between said orthogonal aspects, represent evidently all the hidden and visible links that were expressed or implied in the old DCS HW/SW configuration. In order to realise this neutral representation, the first computerised module 5 preferably performs an analysis of the concepts (comprised in the information 2) that should be split and combined in an orthogonal manner according to the third format of the information 4. On the other hand, the computerised module 6 preferably combines said aspects in a manner, which is compatible with the second format of the information 3.

The computerised modules 5 and 6 can comprise, for ensuring an optimised conversion operation, the internal structure, which is described hereinafter.

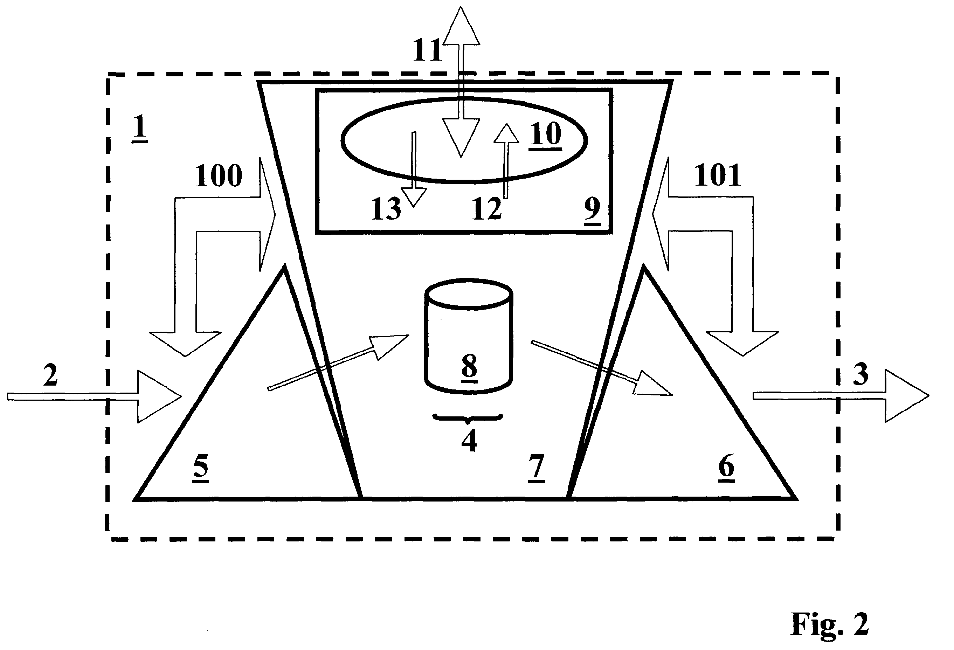

Referring to figure 2, the computerised module 5 comprises preferably first computerised means 20 for converting the first syntax related to the first format of the information 2 into the third syntax related to the third format of the information 4.

Furthermore, the computerised module 5 preferably comprises second computerised means 21 for converting the first semantics related to the first format of said the information 2 into the third semantics related to the third format of the information 4.

The first computerised module 5 comprises advantageously a first database 22 for storing the information 2, acquired from the user.

The first computerised means 20 have advantageously access to the first database 22 and can retrieve the information 2 from it in order to perform the syntax conversion.

Furthermore, the first computerised module 5 can comprise a second database 23, which can be accessed by the first computerised means.

In practice, the database 23 can be used by the first computerised means 20 as a buffer for storing information after the conversion of the syntax of the information 2.

Advantageously, the second computerised means 21 have access to the database 23 from which they can acquire pieces of information on which operating the conversion of the semantics.

Finally, the second computerised means 21 can preferably have access to the first storage means 8, where the information 4a, resulting from the conversion of the syntax and the semantics of the information 2 can be stored.

It should be noticed that the information 4a is not necessarily equal to the information 4. In fact, some integration and/or modifications of the information 4a can be performed by the user, who is able to interact with the conversion process through the computerised means 9, as described above.

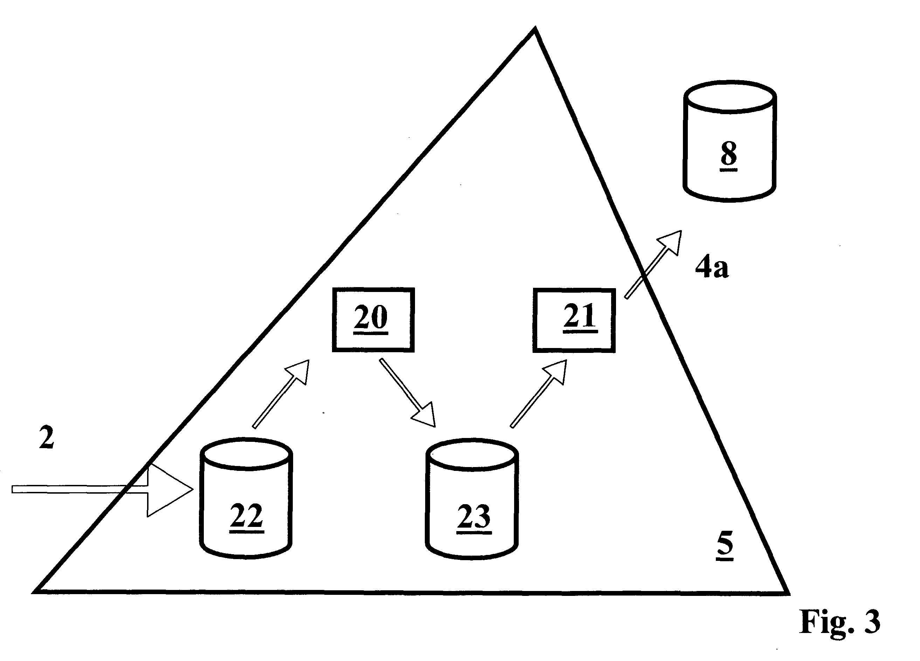

Referring to figure 3, the second computerised module 6 comprises preferably third computerised means 30 for converting the third semantics, related to the third format of the information 4 into the second semantics related to the second format of the information 3. Accordingly, the second computerised module 6 can comprise fourth computerised means 31 for converting the third syntax related to the third format of the information 4 into the second syntax related to the second format of the information 3.

Advantageously, the computerised means 30 have access to the first storage means 8 from which pieces of information 4 can be acquired.

The computerised module 6 comprises preferably a third database 32, which is accessed by the computerised means 30 for storing information after the conversion of the semantics of the information 4.

The database 32 can also be accessed by the computerised means 31, which can acquire pieces of information for performing the conversion of the syntax of the information 4, so as to obtain the information 3.

In order to store the information 3 and to make it available to the user, the computerised module 6 can also comprise a fourth database 33.

In practice, the computerised module 6 can have an internal structure, which is symmetric to the internal structure of the computerised module 5.

This is particularly advantageous, because it allows supervising in a clear manner all the operation performed by the computerised modules 5 and 6.

For the same reasons, the use of the databases 22, 23, 32, 33, has proven to be particularly advantageous.

The practice has proven that the computerised tool, according to the present invention allows achieving all the intended aims.

In fact, the information related to the HW/SW configuration of the DCS can be entirely converted, without any loss of information.

The computerised tool, according to the present invention, can be used and adapted with ease to different types of distributed control systems, thanks to the described "neutral" representation.

Moreover, the know how developed for converting the "neutral" representation into the representation suitable for the new DCS can be always reused, independently from the nature and characteristics of the old DCS.

This fact allows achieving a further saving of the upgrade costs in case of extensive use of the computerised tool according to the present invention.

Thanks to the computerised means 9, it is possible to maintain a suitable level of supervision of the information flow during the conversion process and to interact with it, if needed.

The computerised tool according to the present invention can be easily implemented, in practice. In particular, a personal computer running a suitable multitasking operating system provided with windowing GUI (Graphical User Interface) capabilities may be used.

Moreover, a Java virtual machine adapted for said multitasking operating system might be advantageously used.

The information 2 can be provided by the user directly, using for example the personal computer mentioned above, or through the use of other available computerised tools. Accordingly, the user can retrieve the information 3 in similar manners.

The computerised tool, according to the present invention, allows for many modifications and variations, all of which are within the scope of the inventive concept. All the details may furthermore be replaced with other technically equivalent elements.

## Claims

1. A computerised tool for converting first information having a first format, provided with a first syntax and a first semantics for describing the hardware/software configuration of a first distributed control system, into second information having a second format provided with a second syntax and a second semantics for describing the hardware/software configuration of a second distributed control system, **characterised in that** it comprises:
- a first computerised module for:
- acquiring said first information from the user;
- converting said first information into third information having a third format provided with a third syntax and a third semantics for describing the hardware/software configuration of a virtual distributed control system, said virtual distributed control system having hardware/software configuration independent of the hardware/software configuration of said first distributed control system and of the hardware/software configuration said second distributed control system;
- a second computerised module for:
- acquiring said third information;
- converting said third information into said second information;
- making said second information available to the user.

2. A computerised tool, according to the claim 1, **characterised in that** it comprises a third computerised module for managing the operation of said first computerised module and/or said second computerised module.

3. A computerised tool, according to the claim 2, **characterised in that** said third computerised module comprises first storage means for storing said third information.

4. A computerised tool, according to the claim 2, **characterised in that** said third computerised module comprises managing computerised means for:
- supervising the operation of said first computerised module and/or of said second computerised module; and/or
- optimising and/or restructuring said third information.

5. A computerised tool, according to the claim 4, **characterised in that** said managing computerised means comprise a computerised user interface for:
- providing the user with diagnostic information related to the operation status of said first computerised module and/or of said second computerised module.; and/or
- allowing the user to provide additional information to said managing computerised means for restructuring and/or optimising said third information.

6. A computerised tool, according to one or more of the previous claims, **characterised in that** said first computerised module comprises first computerised means for converting said first syntax related to said first format of said first information into said third syntax related to said third format of said third information.

7. A computerised tool, according to the claims 6, **characterised in that** said first computerised module comprises a first database for storing said first information, said first computerised means having access to said first database.

8. A computerised tool, according to one or more of the previous claims, **characterised in that** said first computerised module comprises second computerised means for converting said first semantics related to said first format of said first information into said third semantics related to said third format of said third information.

9. A computerised tool, according to the claims from 6 to 8, **characterised in that** said first computerised module comprises a second database, which is accessed by said first computerised means and by said second computerised means respectively during the conversion of the syntax and the semantics of said first information.

10. A computerised tool, according to the claims 8 and 3, **characterised in that** said second computerised means have access to said first storage means.

11. A computerised tool, according to one or more of the previous claims, **characterised in that** said second computerised module comprises third computerised means for converting said third semantics, related to said third format of said third information into said second semantics related to said second format of said second information.

12. A computerised tool, according to one or more of the previous claims, **characterised in that** said second computerised module comprises fourth computerised means for converting said third syntax related to said third format of said third information into said second syntax related to said second format of said second information.

13. A computerised tool, according to claims from 11 to 12, **characterised in that** said second computerised module comprises a third database, which is accessed by said third computerised means and by said fourth computerised means respectively during the conversion of the semantics and the syntax of said third information.

14. A computerised tool, according to the claims 11 and 3, **characterised in that** said third computerised means have access to said first storage means.

15. A computerised tool, according to one or more of the previous claims, **characterised in that** said first computerised module comprises a fourth database for storing said second information, said fourth database being available to the user.

16. Use of a computerised tool, according to one or more of the previous claims, for converting first information having a first format, provided with a first syntax and a first semantics for describing the hardware/software configuration of a first distributed control system, into second information having a second format provided with a second syntax and a second semantics for describing the hardware/software configuration of a second distributed control system.
